# EUROPEAN PATENT APPLICATION

(11) **EP 3 100 992 A1**
(43) Date of publication of application: **07.12.2016**
(21) Application number: 15170293.3
(22) Date of filing: 02.06.2015
(51) Int. Cl.: C04B 35/486, B28B 1/00, C04B 35/111

(54) **METHOD OF PRODUCING A LIGHT CONVERSION OBJECT**

(71) Applicant: Eoswiss Engineering Sarl, 1206 Geneve (CH)
(72) Inventor: Astl, Georg, 1206 Genève (CH)
(74) Representative: Engelhard, Markus

(57) **Abstract**

The present invention relates to a method of producing a light conversion object with a predefined shape. The invention also relates to an object, in particular a watch or optoelectronic device that comprises a light conversion object produced with a method of producing a light conversion object with a predefined shape.

## Description

The present invention relates to a method of producing a light conversion object with a predefined shape. The invention also relates to an object, in particular a watch or optoelectronic device that comprises a light conversion object produced with a method of producing a light conversion object with a predefined shape.

Light conversion objects, which include e.g. luminescent materials, have found a wide variety of applications, including information displays, luminous signs in watches and jewelry, x-ray intensification, inorganic scintillators as well as storage phosphors to detect and measure energy rich particle (like neutrons) and photon radiation (like x-rays). Also, light conversion objects are used in optoelectronic semiconductor (for example "LED" or laser diodes) applications.

The usual processing method to arrive at such a light conversion object is via a high temperature thermal sintering pathway. The raw materials (e.g. metal oxides such as A1203) are mixed together with an activating precursor (e.g. rare earth oxides). The powder is thermally sintered, usually under reducing atmosphere. This atmosphere might be created by added reducing gases to an otherwise inert atmosphere or precursors are added to the sintering powder producing a reductive atmosphere under the decomposing influence of thermal energy. One of the gases used is for example H2 in a nitrogen atmosphere. Precursors to produce such a reducing atmosphere might be for example urea, releasing ammonium on thermal composition.

The reducing agent chemically reduces the activating substances lowering their oxidation number, which is considered in the scientific literature to be a prerequisite for luminescence. All sintering methods are very energy intensive and therefore very costly. Also the application of a reducing gas atmosphere poses serious constructive problems for ovens, as for example hydrogen gas may explode if handled incorrectly. Also, other reductive precursor substances may lead to environmentally hazardous events when they decompose under thermal treatment.

Usually powders are produced in this way. This means the raw components in powder form are mixed together and then thermally treated. The result may be a powder or a three-dimensional object sintered together (depending on the temperature and time of sintering). This powder is then processed further on. For example, it can be blended with an organic polymer and solvents to produce a varnish respectively a luminous resin solution. This varnish or solution may then be applied to various objects. After the application the luminous particles form a luminous surface, or if the luminous resin solution is applied in thicker layers, and luminous three-dimensional body is resulting after solidification and drying. Examples are watch dial marking, phosphor coverage of LEDs, lasers and scintillators used to convert high energy electromagnetic radiation into visible light radiation which is subsequently monitored and measured with optoelectronic devices or photographic films.

In other procedures light conversion material e.g. luminous material in powder form is later transformed into three dimensional bodies via expensive and complicated methods like HIP (hot isostatic pressure), HUP (hot uniaxial pressure) and or SPS (spark plasma sintering).

In addition these bodies then need a surface treatment, which is very complicated as the resulting ceramic bodies are often very hard.

In other applications the light conversion powder is dispersed into a varnish or into a polymer solution and subsequently hardened as a film or as three dimensional objects. This technique is for example used in several industries like watch & instruments industry, to produce luminescent marks on watches and instrument indicators and in the scintillator industry for photon or particle beam detecting devices.

While relatively simply to implement, the procedure bares the cost of several additional manipulation steps such as milling the powder, dispersing into a liquid vehicle, producing a varnish, putting the varnish in place and drying. This procedure is very costly, lengthy, and often involves hand work, thereby exposing workers to chemical substances. In addition it is expensive and a burden to the environment, as solvents need to be evaporated and stay in the environment.

In other applications already luminous powders are fabricated into three dimensional objects by techniques similar to rapid prototyping. There the luminous powder is laser-sintered alone or together with other materials like binders to three dimensional objects.

This method avoids the additional steps of dispersing the luminous powder into a varnish and then using it. Nevertheless the synthesis of the luminous powder beforehand and the selection or production of the right grain size for the laser sintering process cannot be avoided. Also the process is rather slow and leaves the surface of the so produced article rather rough as the grains are just sintered together.

The luminous properties of the resulting materials (for example afterglow time after an exposure to light) are also dependent on the crystalline size, crystalline morphology, crystalline phases and phase distribution of the final product. These parameters are very difficult to control through an oven thermal field, as temperature gradients almost inherently exists in sintering ovens and inside the sintered material. Hence the exact conditions of milling, mixing, transport, duration of the sintering process all influence the final outcome.

A possibility to control crystalline size, morphologies and phase composition is highly desired as out of spec batches can be avoided or their number reduced.

Accordingly, it has been an object of the present invention to produce a light conversion object in high quality, but with a production method which overcomes the shortcomings of the above methods.

According to a first aspect of the present invention, this object is achieved by a method of producing a light conversion object with a predefined shape, said method comprising the steps:
- shaping a non-luminous powder into the predefined shape,
- applying laser radiation to the shaped non-luminous powder such that mechanically stable connections between particles of the non-luminous powder are formed and at least part of the non-luminous powder is converted into the light conversion object, wherein said shaping occurs under application of pressure.

Shaping the non-luminous powder into the predefined shape means that the non-luminous powder is brought into some geometric form with for example quadratic, circular, polygonal cross sections. In this shaped form, preferably every particle of the non-luminous powder touches at least two surrounding particles, except at the borders of the powder form shaped according to the predetermined shape. By this, preferably the powder particles form a three dimensional porous network if they are composed of several layers. If only one layer of particles is used, it forms a porous layer.

Applying the laser light initiates a material transformation. The laser light heats the material and brings it into reaction at a certain temperature. In some embodiments, this may be below melting temperature, in other embodiments this may be above the melting temperature. The application of the laser light may cause a partial or complete melting of the non-luminous powder. The laser light can be configured such that the photo-thermal reaction that is caused by the laser light can comprise a chemical reaction and also recrystallizations, glass-crystal transitions, diffusion and flow process and structural and thermal relaxations. If the temperature is reaching the melting temperature of the substrate, so called laser melting is happening. Photo thermal transformation comprises also laser melting in this context but is not confined to laser melting.

Without wishing to be bound by any theory, the term photo-thermal transformation is meant to refer to a physical and chemical transformation. In particular, the photo thermal transformations can comprise physical effects like diffusion on rare earth elements atoms in the host lattice, phase transitions (comprising eutectic, eutectoid, crystallograhic phase transitions), changing the average grain size and morphology, and/or melting. The chemical effects of the photo thermal transformation can comprise solid state reaction as soon as the activation energy is reached, interdiffusion of atoms at contact points, change of surface curvature due to surface tension gradients, and/or decomposition of compounds.

The pressure that is applied during the shaping of the non-luminous powder can be a pressure of more than 300 kPa, in particular more than 1MPa. Lower pressures can be used if the non-luminous powder comprises a binder. In any case, the applied pressure exceeds the atmospheric pressure.

Surprisingly it has been found that light conversion objects may be produced efficiently with the method of the first aspect. The light conversion object can be advantageously directly produced from pure or mixed pre-shaped raw materials in powder form through melting and reaction, initiated by the laser radiation. Advantageously, the use of reducing atmospheres, reducing agents might be avoided, which reduces equipment costs significantly. Furthermore dangerous gases like hydrogen can be avoided, improving the handling safety. It is advantageous to already convert a pre-shaped raw material directly into a semi-finished product because the sintering steps and all steps associated with it like conversion into a varnish and drying the varnish can be avoided.

It has advantageously been found that through the use of the laser energy also the reaction time is in the seconds to minutes range, opposed to the long sintering times of hours to days in an oven process. Advantageously the production costs may be significantly reduced. Furthermore, the CO2 footprint can be reduced, an environmentally friendly production method is used.

After the photo thermal transformation, objects from the reacted layers of materials can be cut out. These objects then can be assembled into other, more complex three dimensional objects. It is not necessary to proceed via the route of varnish and drying of objects, omitting several now unnecessary production steps.

Surprisingly it also has been found that the grain size and morphology of the resulting product may be closely controlled through the photo- thermal reaction conditions.

More specifically it can be advantageous to control and fine tune the product morphology and mineralogical phases through the fine tuning of laser beam energy, residence time in a given zone and wave length of the laser together with other parameters like e.g. thickness of powder layer, density of powder, light absorbance characteristic.

A light conversion object in accordance with the present invention may be an object which converts an incident light of energy (a) into an exiting light with another energy (b). The incident light (a) might be UV, visible, NIR light. Alternatively, the incident rays may be X-rays. The emitted light is normally light with lower energy. For example UV light is the incident light and green visible light is the exiting light (so called "down conversion"). In the so called "up conversion" two lower energy photons are converted into 1 higher energy photon. For example Near Infrared radiation ("NIR") is converted into visible light. In another example visible light is up- converted into UV light.

Light conversion objects comprise up conversion and down conversion objects. Light conversion objects comprises for example scintillators, conversion layers phosphors for optoelectronics, luminous indicators for watches, light conversion layers for solar silicone panels. Light conversion objects are also called luminous objects in some industries like e.g. the watch industry. In some applications (for example in instrumental markers or night glow applications on the watch dial) the so called afterglow - the time until the human eye can perceive the afterglow of the object after a standardized illumination before- is important. In other applications it is not important. Light conversion objects comprise objects with long (more than Ihour) and short afterglow (less than 1 hour) and very short afterglow (less than 1 minute).In the disclosed embodiments the light conversion object can be produced via a photo-thermal transformation caused by laser radiation.

In embodiments of the invention, the method of producing the light conversion object can be adjusted by varying the laser energy, the laser pulse width, laser frequency, feed of material (non-luminous powder), environment temperature, and other parameters.

In a preferred embodiment, the light conversion elements are produced directly from the non-luminous raw materials by a new photo-thermal synthetic route. The photo-energy is provided by at least one laser source. Through absorption of the laser light beam the powder assembly of non luminous raw material is partially melting and a transformation is induced. As soon as the laser beam energy is moved away, the material solidifies and forms a mechanically stable layer, respectively a three dimensional body.

In a preferred embodiment, the raw material is present as essentially pre-shaped powders of small particles. "Pre-shaped powder form" here means that the material powder assembly is brought into some geometric forms with for example quadratic, circular, polygonal cross sections. In these pre-shaped forms, the particles of the non-luminous powder at least partly touch surrounding particles. Therefore, the powder particles form a three dimensional porous network if they are composed of several layers. If only one layer of particles is used, it forms a porous layer. "Particles touching each other" means that the particles have a contact surface area to neighboring particles. The contact area may be relatively large, if the particles are compressed, like in a powder tablet or comparatively small, if the particles are just in loose contact as for example in a powder layer. The powder tablet may also comprise different materials, which can preferably be arranged as different layers within the tablet.

The shaping of the powder assembly can be done as a dry process, where the powder simply is poured into forms or pressed into forms (for example powder tablets) or the powder assembly can be mixed with the binder and then processed for example through extrusion, casting, dry pressing, gel casting and so forth.

The powder assembly may be circumscribed by material barriers (a "mold") to keep the powder assembly in the correct geometric form. In preferred embodiments, the mold can be a transparent mold, such that laser radiation can be applied through the mold.

In one embodiment the laser radiation is applied for less than five minutes, in particular for less than one minute, wherein preferably the laser radiation is pulsed laser radiation with a heat flux of more than 50 W / mm², in particular more than 100 W / mm². This has the advantage that the method can be performed particularly fast, and with lower energy requirement. It may be difficult to achieve the mentioned heat flux values for a longer time. However, they can be achieved when shorter pulses are used. Thus, higher activation energies can be achieved.

The laser radiation can be pulsed with a frequency of above 100 Hz, preferably with a frequency of higher than 1 kHz or even more preferably higher than 10 kHz. In other embodiments, very short but high intensity pulses are followed by a pause where no laser radiation is applied. Thus, very high intensity pulses can be used.

The non-luminous powder can also be actively cooled during the application of the laser radiation. In this way, very high laser intensities can be used, without burning the non-luminous powder.

In a further embodiment, shaping the non-luminous powder into the predefined shape comprises depositing one or more layers of the non-luminous powder onto a substrate. All of the layers can be deposited first, before applying the laser radiation. In other embodiments, a layer is deposited and the laser radiation is applied to this layer, before a next layer is applied.

The layer of non-luminous powder can preferably be applied with high pressure, such that it is at least weakly affixed to the substrate.

In a further embodiment of the invention, the substrate is a transparent substrate and the laser radiation is applied to the non-luminous powder through the transparent substrate. This has the advantage that the laser light can be applied directly to a larger portion of the non-luminous powder. This can be of particular relevance if thicker layers of the non-luminous powder are used.

In a further embodiment, the non-luminous powder comprises a rare earth element as an activation element. The rare earth elements comprise the elements La, Ce, Pr, Nd, Pm, Sm, Eu, Gd, Tb, Dy, Ho, Er, Tm, Yb, Lu,. In particular as oxides, the rare earth elements can serve as activating precursor.

In a further embodiment, the non-luminous powder comprises a binder, in particular an organic binder, preferably a polyethylene glycol, a polyvinyl alcohol, and/or a polyacrylate. The binders can help bring the non-luminous powder into the predefined shape of the final light conversion object.

In a further embodiment, the non-luminous powder comprises particles with a diameter between 20 nm and 200 µm, in particular between 200 nm and 20 µm. This is particularly relevant if a fine layer is formed, which in a preferred embodiment can also have a thickness between 20 nm and 200 µm. For example such light converting thin films may be used in thin film EL panels and field emission displays (FEDs) devices, optical waveguides or solar cells.

In a further embodiment, the non-luminous powder contains oxides, hydoxides, carbonates, nitrates, oxynitides, nitrides, silicates, borates, zirconates, titanates, sulfides, selenides, phosphates, vanadates, molybdates and/or aluminates of at least one of Be, Mg, Ca, Sr, Ba, Al, Ga, In, Tl, Sn, Zn, Ni, Co, Bi. Pb, Mn Zr, Gd, and Y.

In a further embodiment, the non-luminous powder comprises zirconium dioxide stabilized with dopants selected from the group of Ce, Mg, and Y. Such materials, in stabilized or unstabilized form provide a hard, protective element to the luminous material or if sufficiently activated, is also converting light energy.

In a further embodiment, the activated non-luminous powder is a mixture of at least a first non-luminous powder and a second non-luminous powder, wherein the first and second non-luminous powder have different light absorption characteristics and wherein the step of applying laser radiation comprises a step of applying a first laser radiation with a first wave length and a step of applying a second laser radiation with a second wave length, wherein the first wave length is different from the second wave length.

Advantageously with a mixture of several powders with different laser light absorbance characteristic it is beneficial to use at least two different lasers to start the photo thermal reactions. Through the combined absorption of the two laser light beams, the two materials can be treated under their optimum conditions. These lasers may work simultaneously or intermittently. Each of them is providing photo energy to the corresponding material with the favorable laser light absorption characteristics.

In another embodiment, the powder pre-shaped object comprises different powders mixed and assembled into the same powder object. As the heating of the powder happens due to the light absorbance of the laser light at a specific wave lengths, it becomes clear that powders with different energy absorbance characteristic e.g. light absorbance spectra, may preferably be treated with different lasers, each having a laser emission wave length matching the absorbance characteristic of the material in a fashion known to the one skilled in the art.

In a further embodiment, the first laser radiation and the second laser radiation are applied simultaneously. This has the advantage that the method can be carried out very fast, but still achieves photo thermal reactions that are targeted at the different components of the non-luminous powder.

In a further embodiment, the laser radiation has a power of at least 1 W per mm² of surface of the shaped non-luminous powder. This has the advantage that within a short time a melting and/or reaction of the non-luminous powder can be achieved. Thus, even energy can be saved compared to a method that uses a lower power, but over a longer period of time.

In a further embodiment, the method further comprises the steps:
- letting the light conversion object cool down after applying the laser radiation,
- applying an external layer of a further non-luminous powder to the light conversion object,
- applying laser radiation to the external layer such that a mechanically stable external layer is formed on the first layer.

In certain example embodiments the non-luminous powder is photo-thermally transformed layer by layer. That means that the raw material of the non-luminous powder is deposited as a layer of already formed light conversion material. Then the laser is initiating the photo thermal transformation, thereby also making solid mechanical bonds at least in parts to the interface. In a subsequent step a new material layer is then again deposited onto the already made conversion element. This is repeated until the total height desired is reached. Thus it might be advantageously to combine the same material in each layer, or to use different materials in at least one layer.

In another embodiment the powder composed of particles which partially touch each other is photo thermally transformed into a mechanically solid, three dimensional object. It might be advantageous to, in a second step, cut out individual smaller objects or material layers.

More specifically this can be also done by a laser cutting method. Advantageously, in a third step these objects or layers are subsequently assembled to a more complicated final three-dimensional object which ultimately may be used in the final product like a LED or a watch. As this techniques is the opposite of the so called "additive manufacturing techniques" where objects are directly build from powders, this technique is here called subtractive manufacturing technique, because the object is cut out and then parts are made into a new object.

A second aspect of the present invention relates to a watch or optoelectronic semiconductor device comprising a light conversion object produced according to one of the above embodiments of the first aspect of the invention.

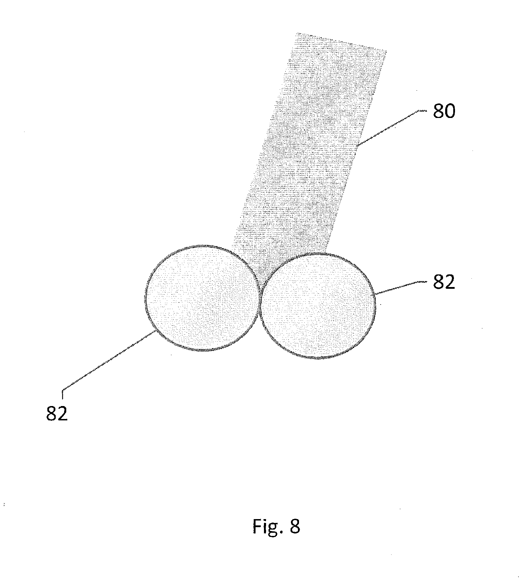

In some example cases the laser beam diameter may be at least as large as the diameter of one individual particle. With this laser beam the high energy intensity is concentrated on the smaller surface area portion of the powder assembly (Fig 8). Due to light absorbance, the material may be heated very rapidly to high temperatures and a photo thermal transformation may be induced. At these high temperatures the material may melt and/ or react and as the laser moves away, the material subsequently re-solidifies or builds a mechanically stable connection through the reaction.

It has advantageously be found that by the exact choice of speed of this movement and the wavelength of the laser and the packing density of the powder, the heating rates and the cooling rates can be adjusted. Depending on the heating rates and the cooling rates, the thermal conductivity, the thermal radiance and thermal capacity of the surrounding material the crystal size, the crystalline class type and the crystal morphology may be controlled.

The laser beam is rastering the whole surface of the powder object. Rastering here means that surface portions of the powder assembly are subsequently laser treated and by this the photo thermal reaction is initiated. It is understood that the laser beam may raster a given point several times. If the laser beam hits a certain point several times the material is liquefied again if the temperature is high enough, transforms again and then solidifies again. Again the morphology of the resulting material is depending on the final temperature, the heating rates and the cooling rates and the thermal transfer numbers in this zone.

At least in one of the embodiments a ceramic light conversion element may be synthetized through this photo thermal transformation method.

Through the energy input provided by the laser or other photo thermal sources like strong, concentrated light beams, the material melts and transforms in small zones. Where the material melts and re-solidifies or reacts, the original powder particles form a mechanically stable connection. The powders used for this photo thermal transformation procedure, may all have high melting points or have very different melting points. Also they may crystallize onto cooling or they may stay amorphous or X-ray amorph (amorph here means in the physical status of an undercooled liquid. X-ray amorph means showing no distinct x-ray diffraction patterns, indicating for example a microcrystalline phases) during cooling.

In some example cases, by combination of materials with different melting temperatures a dispersion of high temperature melting particles in a low melting matrix may be achieved.

Advantageously, the second element may serve as a lower melting matrix builder or as a mechanical, protective matrix or simply reduce the porosity of the final body.

In another embodiment the other powder components may have melting temperatures in the same range or even higher than the luminous material, which is subsequently formed. These materials like zirconium dioxide (zirconia, ZrO2) in stabilized or unstabilized form provides a hard, protective element to the luminous material or if sufficiently activated, is also converting light energy.

In another preferred embodiment, the material resulting from the photo thermal reaction is cut into smaller pieces. This can be done through classical mechanical treatments but also for example with laser cutting. The advantage of laser cutting is that also hard ceramic materials can be processed and further on that the resulting surface quality is already acceptable for the next manufacturing step.

In another embodiment, this cut out part is subsequently used and inserted into an apparatus. This apparatus might be for example an indicating device for measurement instruments, luminescent dial components in watch making, inserts in jewels or light conversion elements in microelectronics (e.g. optoelectronic semiconductors)

In another preferred embodiment the resulting material from the photo-thermal reaction is cut out already in the correct form for use as light conversion element in LEDs ("Light emitting devices"). The advantage of this direct application method is, that the liquid stage- pastes and liquid varnishes- are not necessary. The light conversion elements are cut out; they may be directly inserted and fixed to the LED. In certain example embodiments, the cut out elements may also be combined into larger elements before fixation into the LED or laser.

The conversion element disclosed through one of the embodiments is useful for the conversion of primary to secondary irradiation. The conversion element may be used as a part of a optoelectronic semiconductor. Especially it might be advantageous, covering the light emitting surface of a optoelectronic semiconductor. For example the geometric dimension of the conversion element equals the dimension of the optoelectronic semiconductor, so that at least a partial contact between the conversion element and the light emitting surface of the semiconductor is made.

In another embodiment, the conversion element is in the form of a chip cover. The conversion element, produced through the methods disclosed in the embodiments, is not directly connected to the optoelectronic semiconductor chip, but is part of the enclosure. Particularly the conversion element may be part of the side wall of the said enclosure.

The process described for the different embodiments can be determined by microscopic examination without doubt. Therefore the resulting conversion element is also characterized through this manufacturing method. All disclosed features of the method are therefore also disclosed for the conversion element.

An advantage of the described invention is the direct processing of non-luminous raw materials into a luminous three-dimensional object. Another advantage of the invention is the subtractive manufacturing of complex three-dimensional objects composed out of smaller objects or layers of luminous materials. This method avoids the lengthy additive manufacturing, but uses very speedy manufactured precursors where either the ready objects or parts of the final objects are also cut out with a high speed.

Assembling of the smaller objects might be done advantageously for example through gluing, laser welding, sticking and similar operations known to the one skilled in the art.

Furthermore, assembling of the smaller objects can be done advantageously also through laser induced photo-thermal transformations at the contacting surfaces. In a preferred embodiment, a non-absorbing laser light might be directed through the small pieces to be contacted, shining on the contact surfaces. To this end, it may be necessary that the contact surfaces are beforehand treated with light absorbing paint. In this way, an increased absorption of laser light at the location of the light absorbing paint is achieved. Through the absorption of the laser light, a photo thermal transformation can be induced at the location of the absorbing paint, which leads to a solid connection between the joining parts. Thus, smaller objects with simple structure can be assembled into a more complex object.

Preferably, the method can comprise:
- letting a first light conversion object cool down,
- applying a laser light-absorbing paint on the first light conversion object, and
- applying laser radiation to the laser light-absorbing paint.

In another embodiment, luminous materials of different types can be assembled. Different types here means that the luminous material can be excited by light with different wavelengths and then also emits conversion light with different wavelengths. Thus, complex three-dimensional objects with very complex light conversion possibilities can be formed.

In a preferred embodiment of the invention, the raw material powder is forming a pre-shaped layer. Pre-shaped layer means that the powder surface may be in the form of the circular a rectangular or a polygonal shape. Pre-shaped also means that powder particles partially touch each other. By partially touch each other it is meant that they have several contact points with some other surrounding particles. The pre-shaped layer may be a loose layer of particles, or a layer of particles held together by an organic binder or by a liquid or may be pressed as a powder tablet.

The thickness of these powder layers are limited on one side by the particle thickness on the other side by the penetration depth of the laser used. Thicknesses are between 20nm and 20 mm in one embodiment.

In another embodiment the particle layer is directly posed on the final substrate. That means, upon laser induced photo thermal reaction, the raw material particles do not only form a mechanically connection to each other, but also to the substrate. The advantage of this technique is that luminescent layers of materials can be directly produced on the final product, omitting for example printing steps or the manual application of luminescent colors. The substrate may be for example ceramic materials like tiles or glasses, but also metallic or plastic materials or optoelectronic materials. For example luminescent signs for example escape route indicators may be adhered to these substrates.

In another embodiment the luminous layer (for example Gd- garnet) is affixed to a scintillator screen to detect radiation like neuron radiation.

Scintillators are crystals that luminesce under exposure to ionizing radiation including alpha, beta, x-rays, gammas and neutrons. Scintillator crystals behave as amplifiers for the incident radiation. The ionizing radiation is absorbed and converted into many photons (sometimes also particle radiation) of lower energy radiation. By this the detection is facilitated. For example Gd has very high capture efficiency for neutron radiation. The interacting neutrons lead to a manifold amplified exit of lower energy photons which are sub sequentially detected with for example photo multipliers or other optoelectronic devices.

In another preferred embodiment the particle layer of raw material is posed as a fine layer, forming a film after the photo thermal reaction. This film may adhere to other ceramic (e.g. quartz), glass, metallic or semiconductor (e.g. silicone) materials. The film thickness may be in one preferred embodiment between 20 nm and 200 µm. For example such light converting thin films may be used in thin film EL panels and field emission displays (FEDs) devices, optical waveguides or solar cells.

In certain example embodiments the laser beam is scanned over the powder layer with a certain speed. Scanning means that the laser beam travels over the powder surface. The laser does not only illuminate a geometric line, but will form illuminated bands on the surface. The travelling direction of the laser beam may be in all 3 space dimension.

In another embodiment, the laser beam rests and the object is moved through the laser beam. For example the powdered object is sitting on a conveyor belt and moved through the laser beam. The conveyor belt transports the object through the laser beam. The laser beam may move perpendicular to the principal direction of transport, travelling over the surface of the object. The laser may travel not only on a geometric line but illuminates bands of laser light on the to be treated object.

In another embodiment the laser is moving and the object stays at rest. For example the laser is moved circularly around a cylindrically object, thereby scanning over the surface of the object in a line-wise or band-wise manner. The laser may move with speeds between 1 mm / s and 20 mm / s, in particular with between 5 mm / s and 10 mm / s.

Band wise here means that the laser beam is not moved along a geometric line (with zero thickness), but that the laser beam describe a certain band on the surface. The thickness of the band is limited through the intrinsic thickness of the laser beam at the position of intersection with the object, on the minimum side. On the maximum side the thickness of the laser beam is only limited by the amount of energy necessary to heat the surface sufficiently.

In some example cases, the movement may be caused through movement of the laser beam, the laser or the object upon which the laser light is directed. Also combinations of for example the object on a conveyor belt is moved through a laser irradiation

In another preferred embodiment not the whole of the pre-shaped form is illuminated by the laser beam at the same time. The laser beam is moved over the powder layer. This movement may be vertically, horizontally or in the thickness dimension of the powder object. The powder object may stay at rest or may be moved relative to the laser beam.

The laser beam may be continuous or may have a certain frequency of pulsations. The laser beam may impact from different angles onto the surface. These angles are defined by geometric considerations, but also by the sense of travelling of the object.

For objects on a conveyor belt moving at a certain speed inside a laser beam equipment, the vertical or mainly vertical to glazing laser beam incidence may be favorable. On objects which rest on a surface and the laser is moved around the object, an essentially vertical movement of the laser beam may be more beneficial. The laser can direct one laser beam onto the object. The laser beams may be split up with beam splitters or semitransparent mirrors into several beams which work at the same time at the object.

In the following detailed description reference is made to the figures, wherein
- Figure 1: shows a watch dial with luminescent marks made out of light conversion ceramic material,
- Figure 2: shows a neutron detection device, where the neutron capture comprises device a layer of electromagnetic radiation conversion material,
- Figure 3a: shows a non-luminous powder pre-shaped in the form of a pressed powder tablet,
- Figure 3b: shows a non-luminous pre-shaped powder in a mold,
- Figure 3c: shows a non-luminous pre-shaped powder on a support,
- Figure 3d: shows a non-luminous powder pre-shaped as a layer,
- Figure 4a: shows a non-luminous powder pre-shaped in a direction indication form,
- Figure 4b: shows a non-luminous powder pre-shaped in a circular shape,
- Figure 4c: shows a non-luminous powder pre-shaped in an indicator shape and a number shape,
- Figures 5a and 5b: show smaller objects or material layers that are cut out from a photo thermally transformed three dimensional product,
- Figures 6a and 6b: illustrate a method of assembling complex light conversion objects from simpler light conversion objects,
- Figure 7: shows a possible manufacturing sequence,
- Figure 8: shows a laser beam applied to a plurality of particles,
- Figure 9: shows an example of a product distribution in an intermediate's product cross section,
- Figure 10: shows a simulated watch dial with inserted light conversion objects, and
- Figure 11: shows an example of a complex, assembled body of a light conversion object.

The following examples are intended to describe the invention more specifically by way of example and are not intended to limit the scope or spirit of the invention.

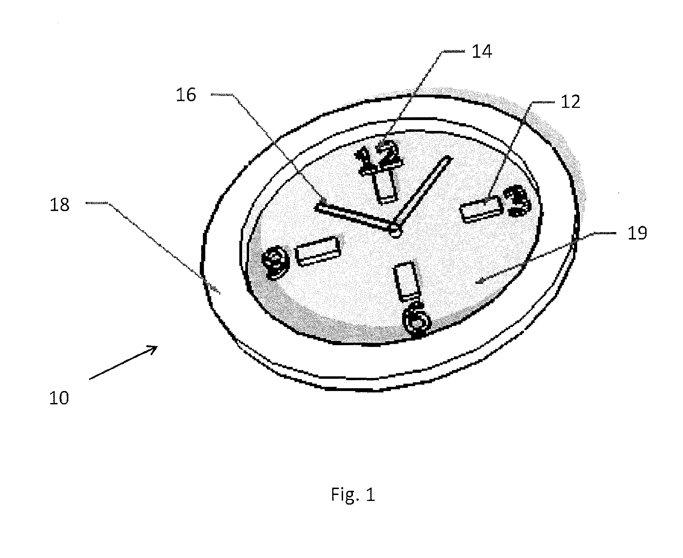

Figure 1 shows a watch dial 10 with luminescent marks made out of light conversion ceramic material. In particular, the indicators 12, the numbers 14 and the hands 16 are made of light conversion ceramic material. The watch 10 further comprises a watch body 18 and a watch dial background 19 which are made of non-luminous materials.

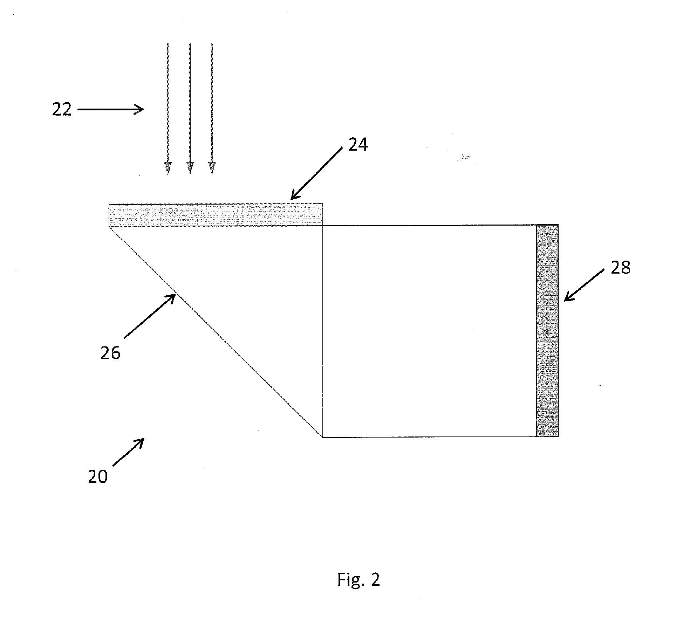

Figure 2 shows a neutron detection device 20, which is adapted to measure a neutron flux 22. The neutron detection device 20 comprises a conversion layer 24 of electromagnetic radiation conversion material. In this conversion layer, the neutron flux 22 is converted into a light. The light is reflected on a mirror 26 and thus directed towards a optoelectronic light detection device 28.

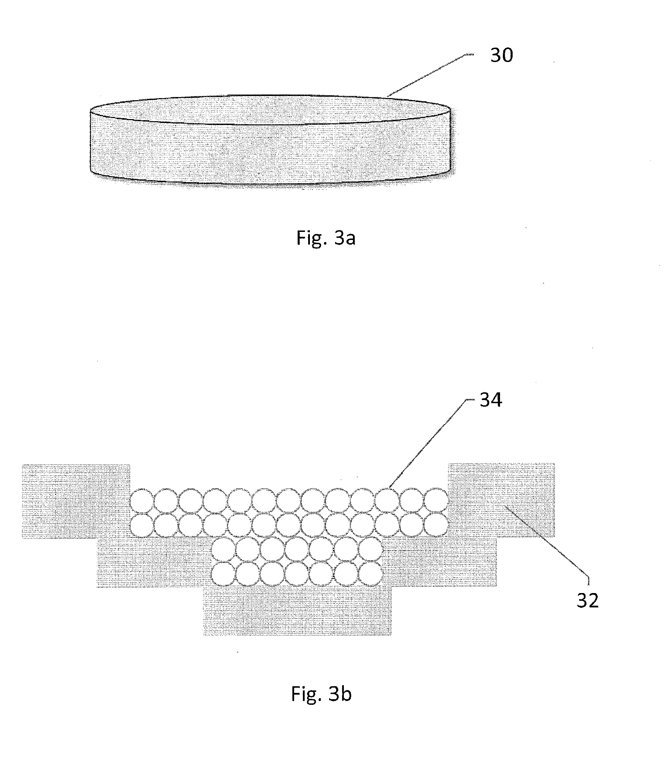

Figure 3a shows a non-luminous powder pre-shaped in the form of a pressed powder tablet 30. Through a photo-thermal transformation, initiated by laser-light, the pressed powder tablet 30 can be converted into a luminous tablet, while keeping the original shape.

Figure 3b shows a non-luminous powder 34 that is preshaped in a mold 32. Laser light can be used to convert the non-luminous powder 34 into a luminous object with a shape that is defined by the mold 34. Preferably, the laser light is

It is also possible to use a transparent mold 34. In this case, laser light can initiate the photo-thermal through the mold. Thus, a more uniform transformation can be achieved.

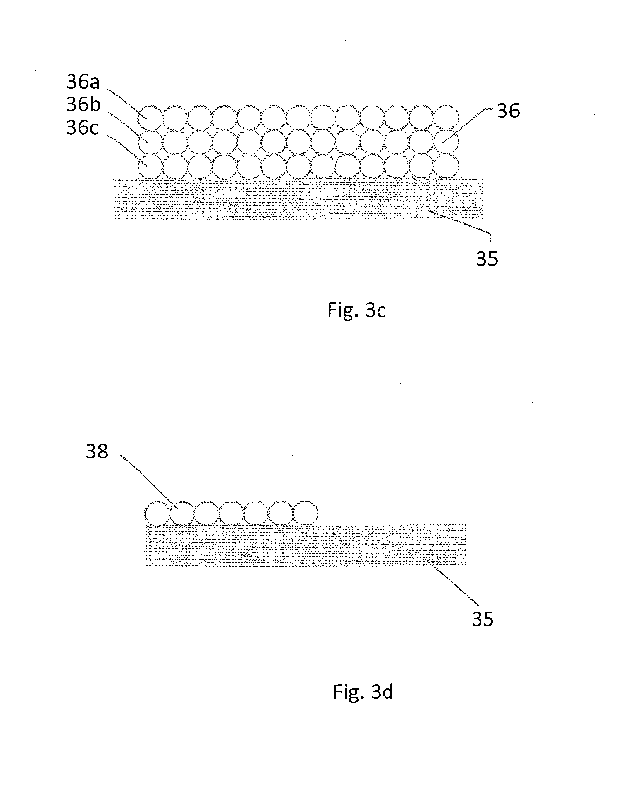

Figure 3c shows a non-luminous powder 36 pre-shaped on a support 35. The photo-thermal transformation can be initiated through laser light from the above, i.e., by directing laser light on the upper surface of the non-luminous powder 36. In other embodiments, the support 35 is configured as a transparent support 35. Thus, laser light can also be directed at the non-luminous powder 36 from the bottom.

In a preferred embodiment, the non-luminous powder 36 is configured as a multi-layered powder, comprising three different powder materials that are arranged in three layers 36a, 36b, and 36c. The photo-thermal transformation of the upper layer 36a can be initiated by laser light from above. The photo-thermal transformation of the bottom layer 36c can be initiated by laser light that is directed at the bottom layer 36c through the transparent support 35. The photo-thermal transformation of the middle layer 36b can be initiated by the laser light from above or below. Thus, laser light of different characteristics (e.g. different power, different wave length, different pulse frequency, and so on) can be used for the different layers and optimal photo-thermal transformations can be initialized in each of the layers 36a, 36b and 36c.

Figure 3d shows a non-luminous powder preshaped as a single layer 38, arranged on a support 35. Laser light can be directed at the single layer 38 from below and above. Thus, a uniform photo-thermal transformation can be achieved, and a higher illumination power can be achieved compared to e.g. directing laser light at the single layer 38 only from above.

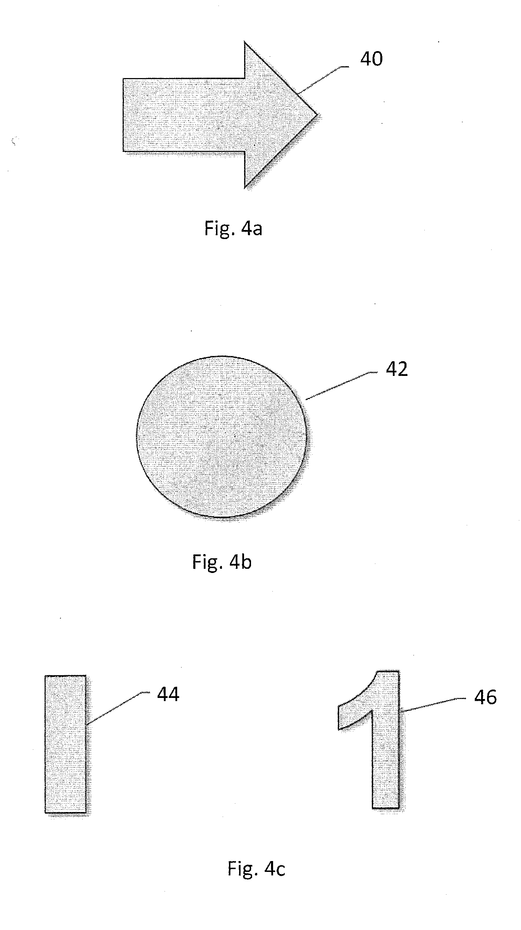

Figure 4a shows a non-luminous powder pre-shaped in a form of a direction indication sign 40. Figure 4b shows a non-luminous powder pre-shaped in a circular shape 42. Figure 4c shows a first non-luminous powder pre-shaped in an indicator shape 44 and a second non-luminous powder preshaped in the shape of the number 1, indicated with reference sign 46.

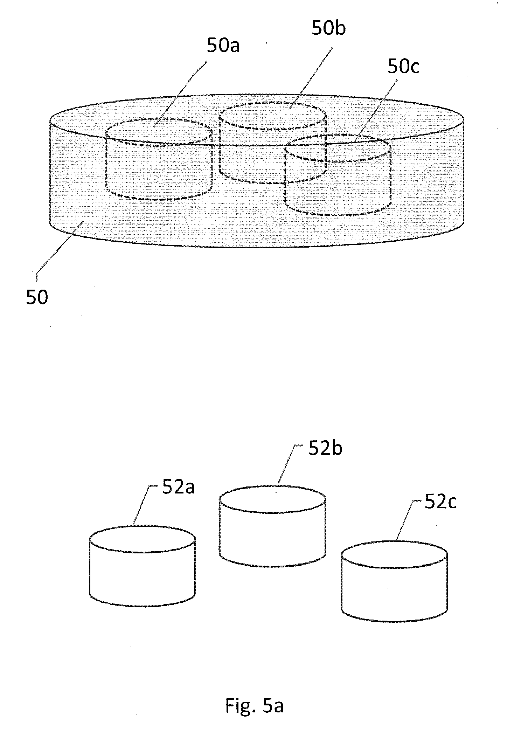

Figure 5a shows a three dimensional object 50 that is produced first and from which three cylindrical forms 52a, 52b, and 52c are cut out, thus leaving three cylindrical holes 50a, 50b, 50c in the original object 50. Thus, a combination of photo-thermally transforming a non-luminous powder into a luminous object 50 and cutting smaller objects 52a, 52b, 52c from the original object can be used to obtain smaller final objects of different shapes.

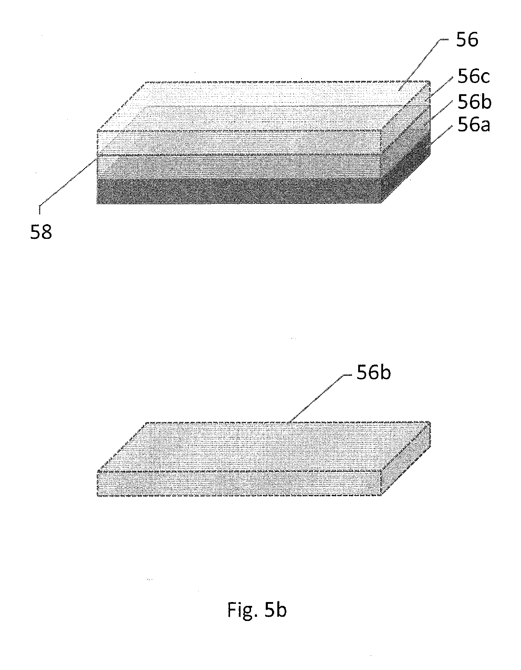

Figure 5b illustrates a further method of obtaining a final product 56b by cutting an original first product 56 along cutting planes 58 into smaller pieces. In particular, Figure 5b shows an original first product that is comprised of three layers 56a, 56b, 56c. The original product can be produced by the photo-thermal transformation, initiated e.g. by laser light from different directions, as described in the context of Figure 3c.

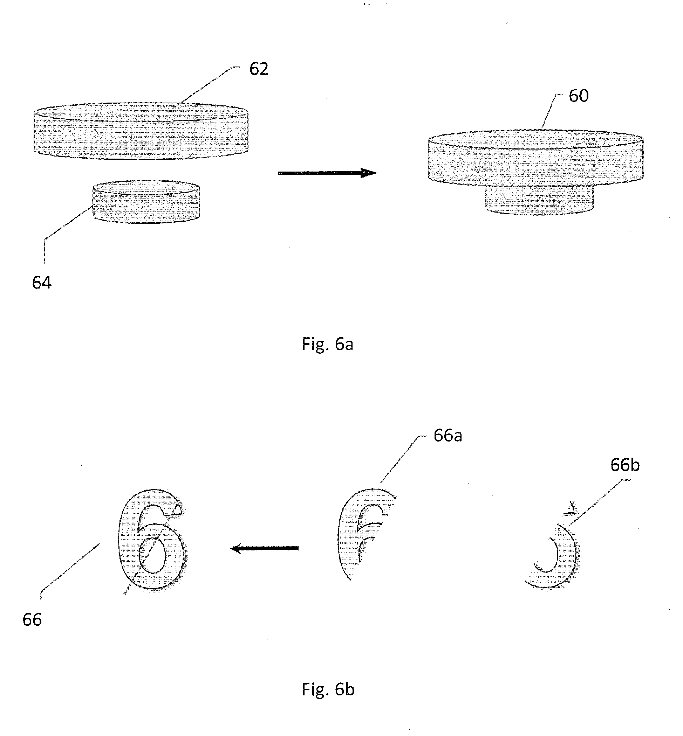

Figures 6a and 6b illustrates a method of assembling complex light conversion objects from simpler light conversion objects. In Figure 6a, a first object 62 and a second object 64, both with circular shape, are assembled to a final assembled form 60 that has a more complex form.

In Figure 6b, a final shape 66 that corresponds to the number "6" is assembled from a first part 66a and a second part 66b. Thus, more complex shapes can be assembled in cases where it would be difficult to apply the photo-thermal transformation directly to the final shapes.

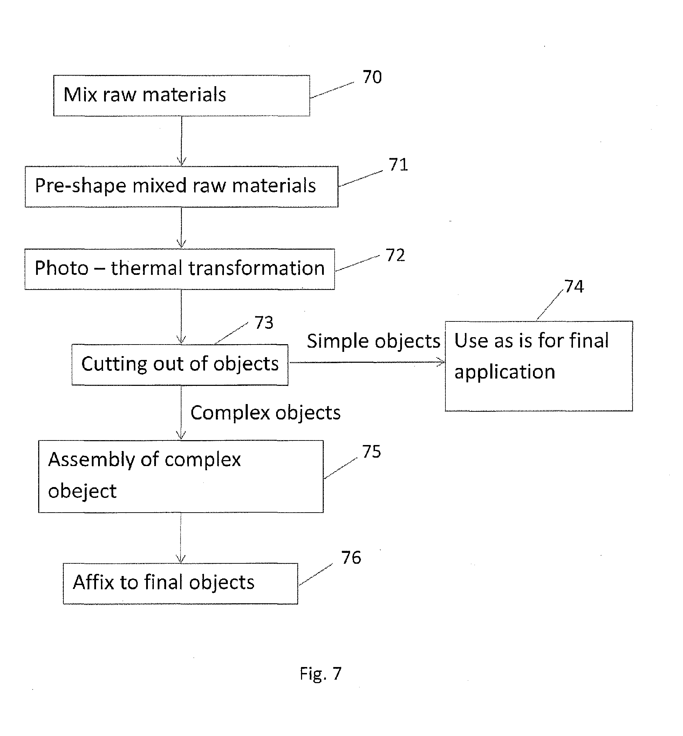

Figure 7 shows a possible manufacturing sequence. In a first step 70, raw materials are mixed. As outlined above, these can be different non-luminous powders with different characteristics. In step 71, the mixed raw materials are pre-shaped into the desired form of the final product. In step 72, the photo-thermal transformation is applied to the pre-shaped powder. In step 73, simple objects are cut out from the main object. These can be used for the final application (step 74). Alternatively, in step 75, they can be assembled into one or more complex objects. In step 76, they can be affixed to final objects.

Figure 8 shows a laser beam 80 that is applied to a plurality of particles 82 of the non-luminous powder. Preferably, a diameter of the laser beam is at least as large a single particle.

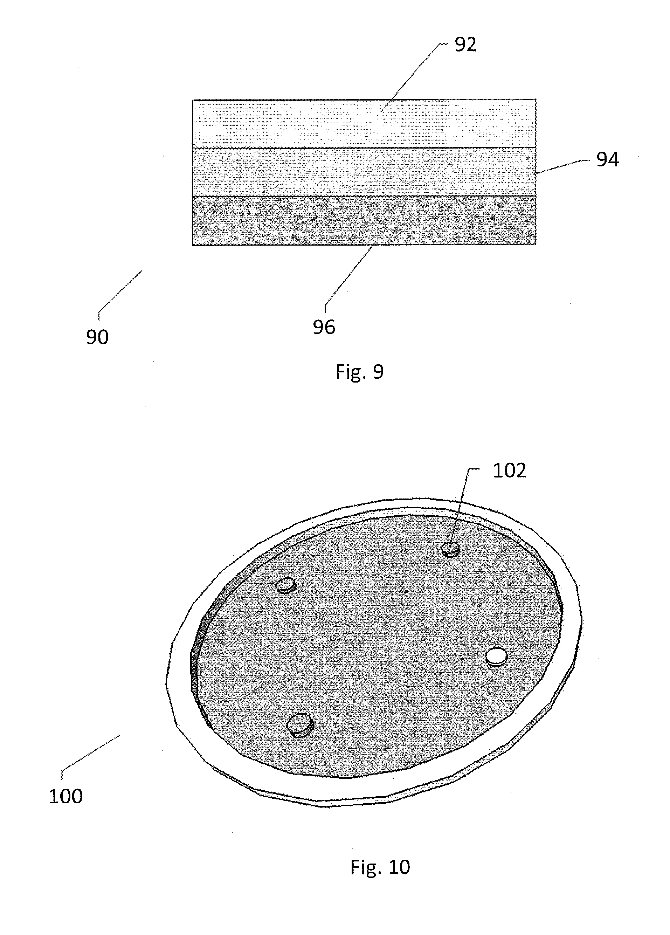

Figure 9 shows an example of a product distribution in a cross section of an intermediate product 90. The intermediate product comprises a first layer 92 that is photo-thermally transformed to obtain a layer with normal luminescence. A second layer 94 is photo-thermally transformed to obtain a layer with strong luminescence. A third layer 96 is photo-thermally transformed to obtain a layer with low luminescence.

Figure 10 shows a watch dial 100 with inserted light conversion objects 102. The light conversion objects can be produced e.g. with one of the methods described above.

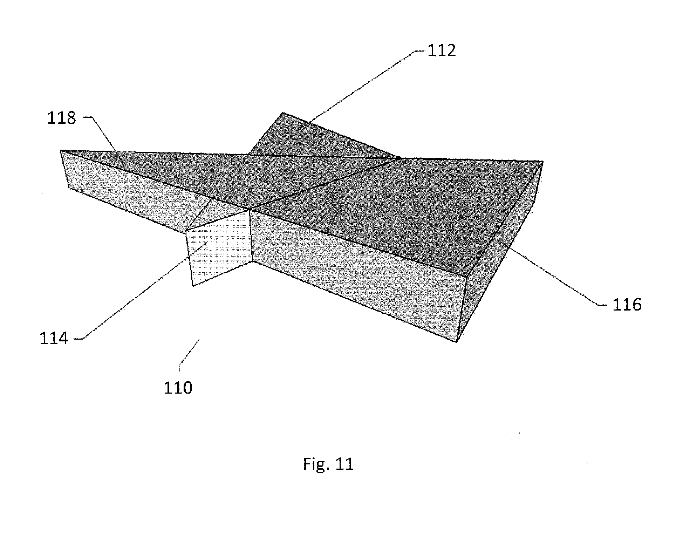

Figure 11 shows an example of a complex, assembled body of a light conversion object 110. The object is assembled out of four simpler objects 112, 114, 116, 118.

In the following, several powders and powder mixtures that can be used for the photo-thermal transformation are described in more detail.

In particular, the non-luminous powder can comprise commercial SrCO3 (99.8 weight % purity; Aldrich), Al2O3 (99.9 weight% purity; Aldrich), Eu2O3 (99.9 weight % purity; Aldrich), and/or Dy2O3 (99.9 weight% purity; Aldrich)

### Example 1:

1mol Al2O3, 1 mol SrCO3, 0.01 mol Eu2O3 were mixed together in a ball mill. The corresponding powder was pressed as a powder tablet and put under the laser beam exit. The powder assembly was then scanned with a CO2 laser (maximum nominal power at 20 kHz: 350 W; the laser spot on the object had 1mm diameter; the laser beam moving speed was 10mm per sec).

### Example 2:

1mol Al2O3, 1 mol SrC03, 0.005 mol Eu2O3, 0.01mol Dy2O3,were mixed together in a ball mill. The corresponding powder was pressed as a powder tablet and put under the laser beam exit. The powder assembly was then scanned with a CO2 laser (maximum nominal power at 20 kHz: 350 W; the laser spot on the object had 1mm diameter; the laser beam moving speed was 10mm per sec).

The features disclosed in the specification, the claims and the drawings may, alone or in any combination thereof, be essential in the practice of the present invention.

## Claims

1. Method of producing a light conversion object with a predefined shape, said method comprising the steps:
- shaping a non-luminous powder into the predefined shape, and
- applying laser radiation to the shaped non-luminous powder such that mechanically stable connections between particles of the non-luminous powder are formed through a photo thermal transformation and at least part of the non-luminous powder is converted into the light conversion object,
wherein said shaping occurs under application of pressure.

2. The method of claim 1, wherein the laser radiation is applied for less than five minutes, in particular for less than one minute, wherein preferably the laser radiation is pulsed laser radiation with a heat flux of more than 50 W / mm², in particular more than 100 W / mm².

3. The method of one of the previous claims, wherein shaping the non-luminous powder into the predefined shape comprises depositing one or more layers of the non-luminous powder onto a substrate.

4. The method of claim 3, wherein the substrate is a transparent substrate and wherein the laser radiation is applied to the non-luminous powder through the transparent substrate.

5. The method of one of the previous claims, wherein the non-luminous powder comprises a rare earth element as an activation element.

6. The method of one of the previous claims, wherein the non-luminous powder comprises a binder, in particular an organic binder, preferably a polyethylene glycol (PEGs), a polyvinyl alcohol, and/or a polyacrylate.

7. The method of one of the previous claims, wherein the non-luminous powder comprises particles with a diameter between 20 nm and 200 µm, in particular between 200 nm and 20 µm.

8. The method of one of the previous claims, wherein the non-luminous powder contains oxides, hydoxides, carbonates, nitrates, oxynitides, nitrides, silicates, borates, zirconatcs, titanates, sulfides, selenides, phosphates, vanadates, molybdates and/or aluminates of at least one of Be, Mg, Ca, Sr, Ba, Al, Ga, In, Tl, Sn, Zn, Ni, Co, Bi. Pb, Mn Zr, Gd, and Y.

9. The method of one of the previous claims, wherein the non-luminous powder comprises zirconium dioxide stabilized with dopants selected from the group of Ce, Mg, and Y.

10. The method of one of the previous claims, wherein the non-luminous powder is a mixture of at least a first non-luminous powder and a second non-luminous powder, wherein the first and second non-luminous powder have different light absorption characteristics and wherein the step of applying laser radiation comprises a step of applying a first laser radiation with a first wave length and a step of applying a second laser radiation with a second wave length, wherein the first wave length is different from the second wave length.

11. The method of claim 10, wherein the first laser radiation and the second laser radiation are applied simultaneously.

12. The method of one of the previous claims, wherein the laser radiation has an average heat flux of at least 1 W per mm² of surface of the shaped non-luminous powder.

13. The method of one of the previous claims, further comprising the steps:
- letting the light conversion object cool down after applying the laser radiation,
- applying an external layer of a further non-luminous powder to the light conversion object,
- applying laser radiation to the external layer such that a mechanically stable external layer is formed on the first layer.

14. Light conversion object produced according to one of the previous claims.

15. Watch or optoelectronic semiconductor device comprising a light conversion object according to claim 14.
